# EUROPEAN PATENT APPLICATION

(11) **EP 2 781 945 A1**
(43) Date of publication of application: **24.09.2014**
(21) Application number: 13160507.3
(22) Date of filing: 21.03.2013
(51) Int. Cl.: G02B 21/30, G02B 21/34, G01N 15/14

(54) **Method for assessing morphology of espermatozoa and system thereof**

(71) Applicant: Projectes I Serveis R Mes D, S.L., 46980 Paterna, Valencia (ES)
(72) Inventor: Soler Vázquez, Carles, 46980 Paterna, Valencia (ES); Blasco Abril, Francisco José, 46980 Paterna, Valencia (ES)
(74) Representative: Pons Ariño, Angel

(57) **Abstract**

Both a system a method for universal assessing of sperm morphology, said assessment is based on the morphometry of the spermatozoa and the presence or absence of some characteristic features of this kind of cells depending on their maturity and some other aspect related to the quality of semen. Hence, the object of the invention permits assessing the quality of sperm by investigating some morphological aspects of in-vivo cells without altering said cells by any chemical fixatives, staining process or any other manipulation that may affect their nature, causing an artifactual analysis, like occurs in all the former ways for morphology assessment.

## Description

### OBJECT OF THE INVENTION

The new method for the evaluation of the sperm morphology overlaps the common limitations of the former methods. Particularly that referred to the production of different kind of artefacts, related with the process of dehydration and action of chemicals during sample processing.

The use of the proposed technique is universal and independent of the satin technique and chemicals availability. This could make possible new and definitive criteria for morphology/morphometry classification in all the species.

Moreover, the analysis of live cells allows the real morphology assessment, with particular preservation of cytoplasmic droplets. The new data will provide the best information to be correlated with fertility and fecundability of the samples, the ultimate objective of the semen analysis.

### BACKGROUND OF THE INVENTION

Analysis of sperm morphology is one of the most representative aspects of semen quality. Cell morphology is an area with a strong genetic component, other than as motility, for instance. However, several technical issues have limited their ability to predict the fertility of the samples (Soler et al., 2005b).

The usual way to assess sperm morphology includes performing a smear, which dries at the air to be re-hydrated and subsequently stained with a high variety of techniques, most of which are based on derivatives of Papanicolau technique. There are many factors that interfere with this process and, consequently, the final result:
1. The volume of the drop used for the smear and quality of the extension performed. For instance, over 5 ul drops, cause the protein components of seminal plasma "clouding" the obtained image.
2. The drying and storing time prior to staining.
3. The staining technique used: long Pap, short Pap, Diff-Quick, Hemacolor, Shorr, hematoxylin, eosin-nigrosin .... (Soler et al., 2005a; Bellastella et al., 2010).
4. The differences in formulation for one defined technique, for example there are at least four different compositions named Diff-Quick, depending on the company manufacturing each kit.
5. The lack of availability of some of the techniques in some countries. Sometimes there are problems to import certain substances, especially when the formulations include alcohols.
6. The mounting or not the preparations after staining, and the mounting medium chosen in each case.
7. And ultimately, that is always a process "artefactual", which implies biological significance changes in sperm morphology (Cooper et al., 2004).

In fact it has been shown that there are significant differences between the results obtained by changing any of these variables (Davis & Gravance, 1993; Coetzee et al., 1998; Soler et al., 2003, 2005a).

In the case of the human species, both the WHO (WHO, 2010) and other international entities (ESHRE, for example) have defined classification criteria based sperm Pap smear, a technique that implies a great cost of time, taking also into account, that some of its components are not readily available in some countries. In addition to these classifications, different research groups have proposed alternative classifications, such as the Kruger strict criteria (Coetzee et al., 1998). As shown, the variability of criteria is large; making it difficult, if not prevents, the validation and comparison of results between laboratories. So, this is a great problem for human samples, but when we refer to other animal species the problem is too big. There is a multiplicity of species-technique pairs, making almost impossible to arrive to a standard sperm morphology classification in any species (Chacón et al., 2001; Brito et al., 2011, Soler et al., 2005a).

What's more, the morphology evaluation is usually done subjectively, based on a variety of criteria. In the case of human species, only taking into account the WHO, a different classification was indicated in each of its seminal assessment manuals, (WHO, 2010), reducing the clinical significance of the test, which will lose a source of highly relevant information (Auger, 2010; Menkveld, 2010). In other species, including that of highest economic interest the lack of standard classification is almost total, limiting a lot the evaluation of the semen quality.

To this, it must be added that the coefficients of variation associated with the subjectivity of the "manual" evaluation of the samples are about 15-20% intra-observer and 20-25% inter-observer. This means that the same sample can be evaluated as "fertile" one day and "infertile" the next day.

The introduction of CASA systems (Computer Assisted Semen Analysis) involved significant reduction of the sources of variation attributable to the subjective evaluation of the samples, but failed to obviate concerning the preparation thereof (Gravance and Davis, 1993; Soler et al., 2003, 2005b).

In the case of livestock animal species, the situation is even more complex and dispersed. In most of these species abnormal morphologies presence is scarce, so many of them are not evaluate or only are evaluated aspects such as the presence of cytoplasmic droplet (proximal or distal) or alterations to the tail. This evaluation is limited in most cases to assessments of presence/absence (1/0) of the morphological characteristic, without any assessment of the studied phenomenon. However, recent studies have shown the importance of morphometric evaluation of the sperm head, as they have high biological significance differences between animals of different fertility. Such differences are significant only with the use of CASA systems with highly accurate staining techniques (Soler et al, 2005a).

Grounds, highlights the need for a system (device) suitable for universal standardization of the evaluation of sperm morphology.

Cytoplasmic droplet significance: The formation of the sperm in the testis comprises two stages, spermatogenesis and spermiogenesis. The first goes from spermatogonia to spermatid, this means from diploid to haploid cells. In the second there are a series of cell differentiation processes (no more cell divisions) ending in the formation of spermatozoa. However, these testicular spermatozoa require a maturation process during its passage through the epididymis. Some of these maturational changes are the progressive acquisition of motility and cytoplasmic drop displacement from a proximal position (near the head) to a distal, being finally detached. In fact, cytoplasmic droplets should not be present in the ejaculate.

Thus, the presence of cytoplasmic droplet in the ejaculate is indicative of the sperm immaturity, being a predictive feature of high significance, especially in livestock animal species. In the case of human sperm, as well as the droplet, is important the presence of other cytoplasmic debris.

Physical-chemical processes that are required during conventional staining of semen (dehydration, chemical fixation, exposure to alcohols, rehydration...) are liable to cause artifactual detachment of the drop. This implies an underestimation of this sperm defect producing a great information lack. Also, observing a living cell in its native state and/or environment can provide far more information than specimens that have been killed, fixed and/or stained.

Phase contrast microscopy: Frits Zernike, a Dutch physicist and mathematician, built the first phase contrast microscope in 1938. It took some time before the scientific community recognized the potential of Zernike's discovery; he won the Nobel Prize in 1953 and the German-based company Zeiss began manufacturing his phase contrast microscope during World War II.

Phase contrast is the most useful microscopic technique for the observation of transparent, colourless and/or unstained specimens. Since this kind of objects does not absorb the light, they could not be seen with any detail before Zernike's discovery.

Two main types of phase contrast are positive and negative.
- Positive phase contrast reveals medium to dark grey images on a lighter grey background; these images often have a bright halo around the edge of the sample.
- In negative phase contrast the specimen appears lighter with a dark background, being better contrasted.

### DESCRIPTION OF THE INVENTION

This document discloses an integrated system and method for determining and analysing the morphology of spermatozoa of any species. Both the system and the method are based on the use of the technique of negative phase contrast microscope at 40-60x, with a high definition camera and appropriate software for automatic analysis of morphometry.

The principle is based on the analysis of living cells. To stop cell movement they will undergo a heat shock (60 ° C for 5s, for human, in other species it must be specifically defined) on a hot plate designed for the invention purpose , the system of the invention comprises sample heating means and pressure meanssaid heating means may be defined by an aluminum plate which ismechanized to incorporate two heating devices controlled by an electronic unit., said device may comprisea display showing temperature. The intention to subjecting the cells to a short heat stroke is immobilize them, because otherwise it would be impossible to be sure that the image is obtained from the maximum flat projection surface of the cell. This process does not cause physical changes in the morphology of the head or in the detection of possible residues or cytoplasmic droplets

Furthermore, the invention accounts for a plate that may either comprise or could be associated (connected or in fluidic communication) to pressure means which ensures the deposition of the cells in their maximum contact surface, without, however, affecting the sperm morphology, since its pressure is just enough to achieve the objective without cellular damage.

The obtained image shows the whole morphology of the spermatozoon, namely: acrosome, post-acrosomal region, midpiece and tail of the sperm. In fact, what may be more important is the new universal observation process that enables the study of sperm morphology on living cells previously undisturbed.

The image is processed using negative phase contrast microscope technique. Previously positive phase contrast or nomarsky microscopy and bright field, after fixation of the cells, have been used but these techniques cannot resolve the problems earlier mentioned.

The software used to carry out the method is designed to automatically perform the morphometric analysis of each spermatozoon component from the images. With the information obtained we may proceed to establish a classification matrix according to a set of world-renowned specialists for each species.

### DESCRIPTION OF THE FIGURES

To complement the description being made and in order to help better understand the features of the invention, according to a preferred embodiment thereof, the following figures are attached as an integral part of said description. Only some species are represented in the collection of pictures we show here, just to have an idea of the diversity of characteristics among them.

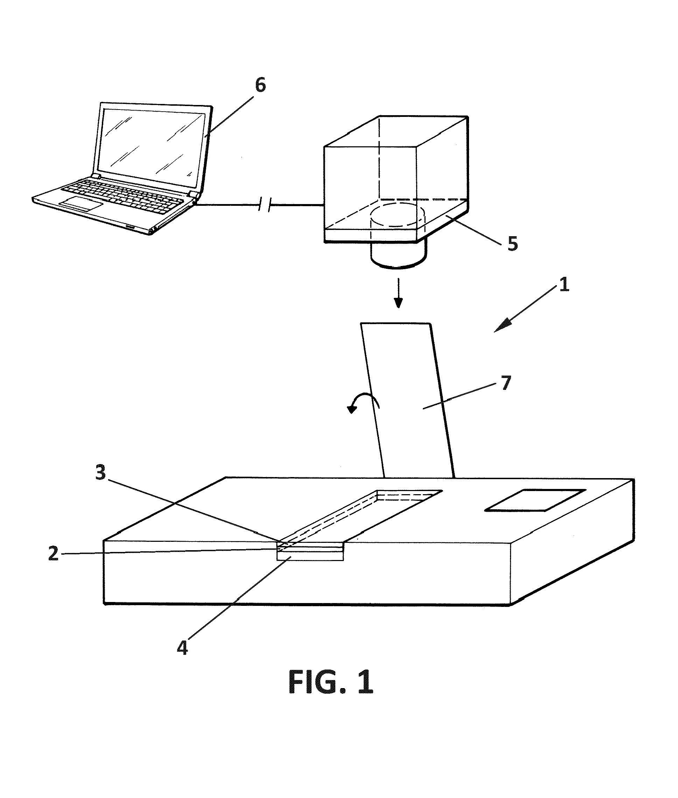

Figure 1. Figure 1. Shows a diagram depicting part of the system of the invention showing the sample holder and heater; the capture system, including a negative phase contrast microscope and a camera and a connection to a computer for image analysis.

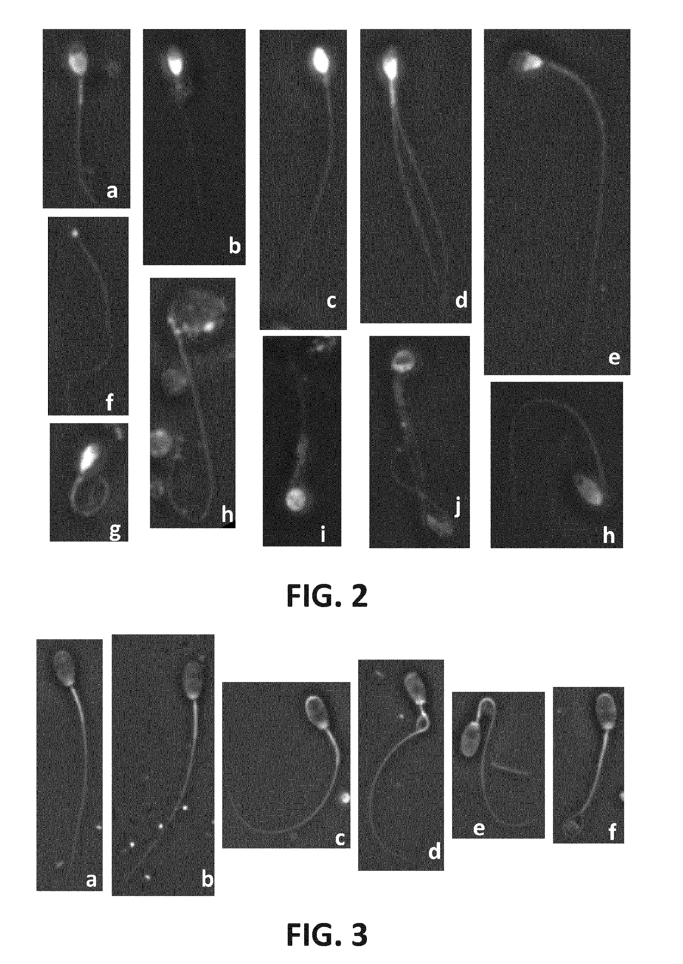

Figures 2a-h. Show some microscopic pictures of human spermatozoa visualized using the technique proposed in this invention using a 60x objective: a) normal morphology; b) cytoplasmic droplet; c) absence of acrosome; d) two tails; e) bent tail; f) pin head; g) coiled tail; h) ghost cell (this kind of abnormal morphology is destroyed during conventional preparations); i) round cell with abnormal midpiece; j) small round head with two midpieces and tails; h) narrow cell with apical vacuole and bent midpiece.
Figures 3 a-f. Show some microscopic pictures of rabbit spermatozoa visualized using the technique proposed in this invention using a 40x objective: a, b) normal morphology; c) bent midpiece; d-e) cytoplasmic droplet; f) bent tail.

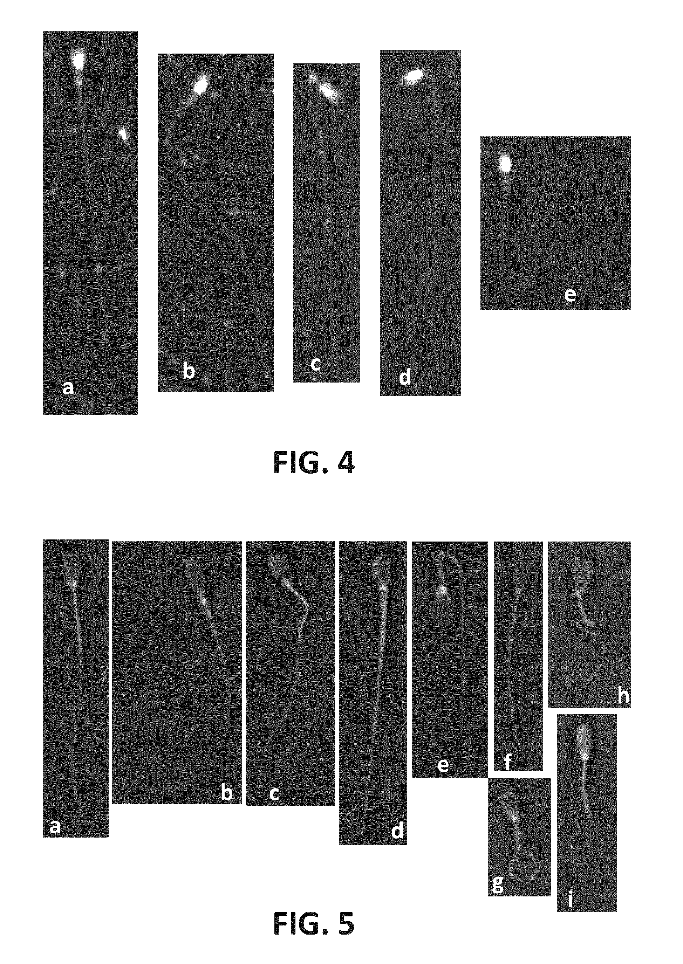

Figures 4 a-e. Show some microscopic pictures of dauphin spermatozoa visualized using the technique proposed in this invention using a 40x objective: a, b) normal morphology; c, d) bent midpiece; e) bent tail. In this species the presence of proximal cytoplasmic droplet seems to be common and not abnormal.
Figures 5 a-i. Show some microscopic pictures of bull spermatozoa visualized using the technique proposed in this invention using a 40x objective: a) normal morphology; b) proximal droplet; c) bent midpiece; d) double midpiece; e) double and bent midpiece; f) bent tail; g-i) different coiled tails.

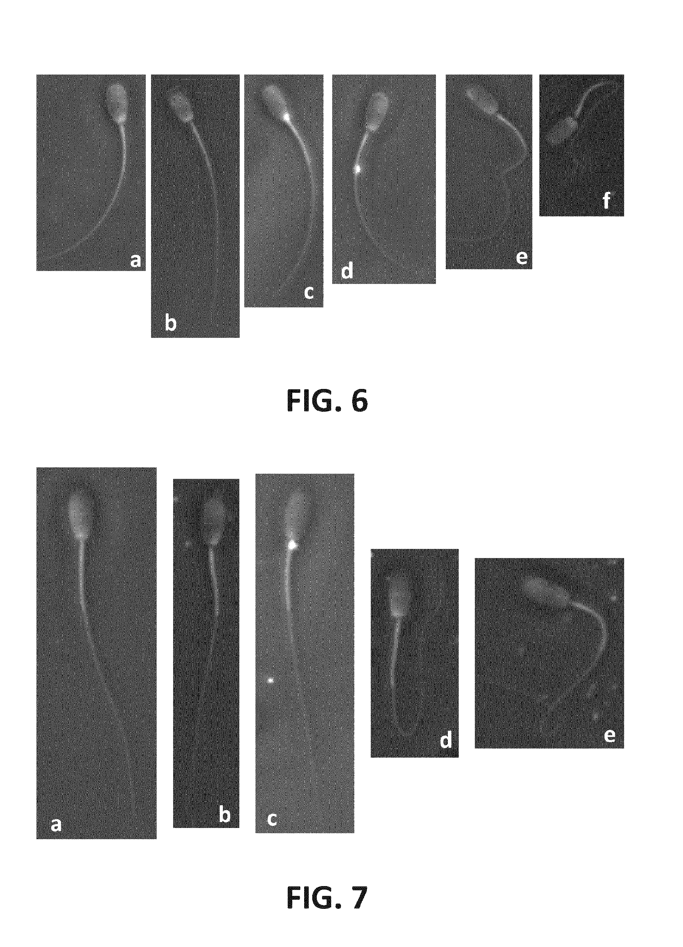

Figure 6a-d. Show some microscopic pictures of boar spermatozoa visualized using the technique proposed in this invention using a 40x objective: a) normal morphology; b) reacted acrosome; c) proximal droplet; d) distal droplet; e-f) bent tail.
Figures 7a-e. Show some microscopic pictures of goat spermatozoa visualized using the technique proposed in this invention using a 40x objective: a, b) normal morphology; c) proximal droplet; d) bent tail; d) double midpiece; e) coiled tail.

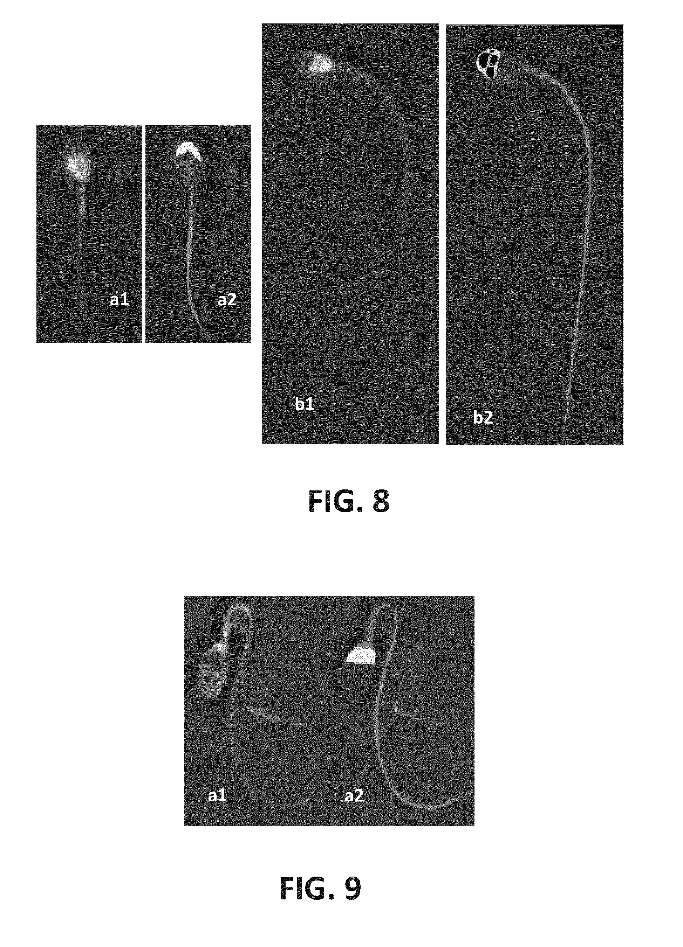

Figures 8a-b. Show some microscopic pictures of examples of spermatozoon interest areas software recognition (1 microscopic image, 2 analysed image). a) normal human spermatozoon showing the acrosome (white), post-acrosomic region (dark gray), midpiece (light gray) and tail (thin end line). b) vacuolated head showing vacuolisations, in dark colour inside the acrosome region.
Figures 9a-b. Show some microscopic pictures of examples of spermatozoon interest areas software recognition images ended by 1 are microscopic images, whereas those ended by 2 are analysed images. All depict a rabbit spermatozoon showing the acrosome (in this case it is more dense than the post-acrosomic region, just the opposite that the human case), the post-acrosome area, the insertion disc, the bent midpiece,the cytoplasmic droplet and the tail.

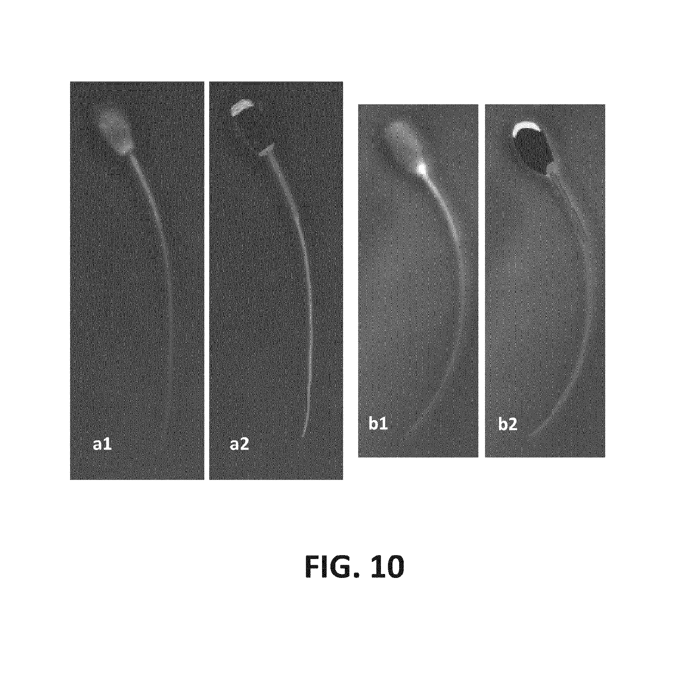

Figures 10a-b. Show some pictures taken from examples of spermatozoon interest areas defined by different tones of gray; wherein 1 stands for microscopic images, and 2 for analysed image: a) normal boar spermatozoon with reacted acrosome (in this species, the acrosome region is no so clearly defined like in others) the post-acrosome area, the insertion disc , the bent midpiece and the tail. b) fine acrosome region, the post-acrosome area, a proximal cytoplasmic droplet, midpiece and the tail.

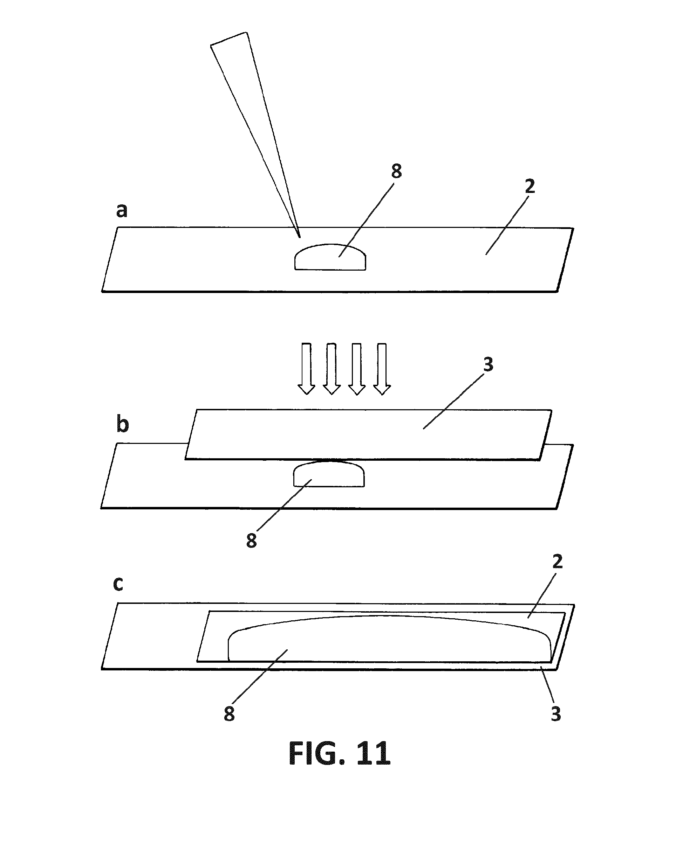

Figures 11a-c. Show some views of the device of the invention illustrating the method of the invention where some steps of the procedure are shown: a) a semen drop is placed on the lower plate; second step is shown on figure, b) the preparation covered with the upper plate; and c) distribution of the semen sample must adjust to the size of the upper plate.

### PREFERRED EMBODIMENT OF THE INVENTION

One of the objects of the invention, a method for assessing the morphology of a spermatozoon depicted in figures 11a to 11c, is achieved by using a system (1) for assessing morphology of spermatozoa, comprising usual and common units already known in the art like at least a processing unit (6) where an image pickup system (5) is connected to, a lower plate (2) adapted to hold at least one spermatozoon, being said lower plate (2) is arranged in relationship to the image pickup system so the latter can capture at least one image of said spermatozoon, and upper plate (3) associated to the lower plate (2) covering it (this upper plate (3) is substantially transparent so the image pickup system (5) can capture images from anything comprised between the plates (2,3)).

The system (1) hereby described and depicted in figure 1 is furnished with heating means (4) associated to at least one of the plates (2,3) said heating means (4) are heating means (4) are in thermal contact with at least one of the plates (2,3) and adapted to generate a certain temperature on at least one of said plates (2,3); in an alternative embodiment the system (1) may be equipped with pressure means (7) associated to the plates (2,3) adapted to apply some pressure on at least on said plates (2,3) getting said plates (2,3) closer one to each other.

For assessing quality of sperm the system (1) allows the assessment of the morphology of spermatozoa since the morphometry and the presence of some characteristics of living cells of sperm gives us important information directly related to spermatozoa mobility and sperm quality, this being said we first placed a sample (8) comprising at least one sample (8) comprising at least spermatozoon on the lower plate (2), then the lower plate (2) with the spermatozoon was covered with an upper plate (3); normal praxis in this kind of analysis.

Since we needed the cell, the spermatozoon to remain still we activated the heating means (4) associated to at least one of the plates (2,3) setting the spermatozoon at a certain temperature which can be shown by a display adapted to show a temperature value of the heating means (4). The spermatozoon is paralysed when temperature is modified for certain period until the spermatozoon paralyses due to the thermal shock, in a preferred embodiment of the invention the temperature is set around 60°C during at least 5 seconds.

Once the spermatozoon is not moving at all we can take a least a digital image of the spermatozoon by means of the image pickup system (5) sending said image to the processing unit (6) for processing the digital image; said processing comprises processing the digital image using negative phase contrast technique determining the morphology of the spermatozoon by determining the morphometry of at least a part of the spermatozoon.

In alternative embodiment of the invention the method hereby described further comprises pressing at least one of the plates (2,3) bringing the plates (2,3) closer so that a longitudinal axis of the spermatozoon, comprised between said plates (2,3), adopts a position parallel to the surface of the lower plate (2) thus projecting its real morphology onto said lower plate (2); this may be accomplished by means of the pressure means (7). Since the sample (8) comprising the spermatozoon is mainly liquid, a fluid with its own properties such as viscosity, density or surface tension; we needed to take that into account whenever we are applying some pressure to one of the plates (2,3), the sample (8) may form a drop which may expand due the pressure applied, said drop may become larger and flat and also spill out from the surface covered by the plates (2,3), during the different experiments carried out in order to assess the morphology of different spermatozoa coming from different species we were able to determine some pressure ranges depending on the specie since we already tested every single fluidic sample (8) obtaining the values referred above for each specimen.

In yet another embodiment of the invention the method hereby detailed further comprises determining the presence of at least one cytoplasmic drop on the processed digital image to determine the maturity of the spermatozoon according to the presence or absence of said cytoplasmic drop as seen on figures 2b, 3d-e, 4a-e, 5b or 9.

## Claims

1. Method for assessing morphology of spermatozoa, the method comprising:
i. placing at least a sample (8) comprising at least one spermatozoon on a lower plate (2),
ii. covering the lower plate (2) with the spermatozoon with an upper plate (3), being the method **characterised by**:
iii. setting the spermatozoon at a certain temperature by means of heating means (4) which are in thermal contact with at least one of the plates (2,3),
iv. taking a least a digital image of the spermatozoon by means of an image pickup system (5) negative phase microscopy, and
v. processing the digital image by means of a processing unit (6) connected to the image pickup system (5) for processing the image in phase contrast determining the morphology of the spermatozoon.

2. Method according to claim 1 further comprising applying pressure on at least one of the plates (2,3) bringing the plates (2,3) closer so that a longitudinal axis of the spermatozoon, comprised between said plates (2,3), adopts a position parallel to the surface of the lower plate (2) thus projecting its real morphology onto said lower plate (2).

3. Method according to either claim 1 or 2 wherein the temperature is modified until the spermatozoon paralyses due to a thermal shock.

4. Method according to claim 3 wherein the temperature is set around 60°C.

5. Method according to claim 4 wherein the temperature is modified during at least 5 seconds.

6. Method according to any one of preceding claims **characterised by** further comprising determining the presence of at least one cytoplasmic drop on the processed image to determine the maturity of the spermatozoon.

7. Method according to any one of preceding claims wherein processing the digital image according to step (v) is carried out using negative phase contrast technique.

8. Method according to anyone of the preceding claims wherein determining the morphology of the spermatozoon according to step (v) comprises determining the morphometry of at least a part of the spermatozoon.

9. System (1) for assessing morphology of spermatozoa, the system (1) comprising:
• at least a processing unit (6),
• an image pickup system (5) connected to said processing unit (6), and
• a lower plate (2) adapted to hold at least one spermatozoon,
• an upper plate (3) associated to the lower plate (2) covering it,
• wherein at least said lower plate (2) is arranged in relationship to the image pickup system so the latter can capture at least one image of said spermatozoon,
being the system (1) **characterised by** comprising heating means (4) associated to at least one of the plates(2,3) wherein said heating means (4) are adapted to generate a certain temperature on at least one of said plates (2,3).

10. System (1) according to claim 9 further comprising pressure means (7) associated to at least one of the plates (2,3) and adapted to apply some pressure on at least one of said plates (2,3) getting said plates (2,3) closer one to each other.

11. System (1) according to either claim 9 further comprising a display adapted to show a temperature value of the heating means (4).
